# EUROPEAN PATENT SPECIFICATION

(11) **EP 1 279 817 B1**
(45) Date of publication and mention of the grant of the patent: **08.06.2011**
(21) Application number: 02016639.3
(22) Date of filing: 25.07.2002
(51) Int. Cl.: F02D 41/04, F01N 3/08

(54) **Control device and method of internal combustion engine**
Steuereinrichtung und Steuerverfahren für eine Brennkraftmaschine
Dispositif et procédé de commande pour moteur à combustion interne

(30) Priority: 26.07.2001 JP 2001226726
(43) Date of publication of application: 29.01.2003
(73) Proprietor: Toyota Jidosha Kabushiki Kaisha, Toyota-shi, Aichi-ken, 471-8571 (JP)
(72) Inventor: Ito, Yasushi, Toyota-shi, Aichi-ken 471-8571 (JP)
(74) Representative: TBK

(56) References cited:
- EP-A- 0 869 267
- EP-A- 0 982 487
- DE-A1- 19 636 790
- US-B1- 6 220 019

## Description

### BACKGROUND OF THE INVENTION

### 1. Field of Invention

This invention relates to a control device and method of an internal combustion engine such as a diesel engine. Especially, the invention relates to the control device and method of the internal combustion engine equipped with an exhaust system including an exhaust purification device which needs to perform a recovery process to recover capability to occlude NOx, and the control method.

### 2. Description of Related Art

An internal combustion engine such as a diesel engine outputs power by combusting fuel, so that the engine inevitably generates exhaust gas, however, from the viewpoint of preservation of the global environment, it is required to purify the exhaust gas generated from the internal combustion engine quickly. An example of so-called contaminated substances contained in the exhaust gas of the internal combustion engine is particulate matter (PM) such as hydrocarbon or smoke and nitrogen oxide (NOx). It is required to reduce the discharge quantity.

The quantity of these substances in the exhaust gas can be reduced by controlling an operation condition of the internal combustion engine such as air-fuel ratio and fuel injection timing or an exhaust recirculation quantity reintroducing part of exhaust gas into an intake side. However, in these days, as requirement for preservation of the environment is becoming stronger, the restriction on the exhaust gas of the internal combustion engine is becoming more rigorous, therefore, improvement of the operation condition of the internal combustion engine cannot satisfy a new restriction on the exhaust gas.

Now, in these days, an exhaust system of the internal combustion engine is equipped with an exhaust purification device, and is structured to transform so-called contaminated substances generated from the internal combustion engine into harmless substances and to release them into the air. Among the examples of the exhaust purification device is the catalyst and is structured so that contaminated substances in the exhaust gas are oxidized or deoxidized through the catalyst.

Such purification reaction through the catalyst induces most efficiently when the catalyst is in an activated condition. Therefore, for instance, a device disclosed in a JP2000-97063 A (publication 1) is structured to prohibit suspending an engine even if the engine is in idling when catalyst temperature is equal to or lower than a predetermined temperature. This is to raise the catalyst temperature rapidly by a continuous engine operation.

Catalyst, in general, functions to promote reactions such as oxidization, and does not transform in itself, therefore, the continuous engine operation promotes the raise of the catalyst temperature by heat brought from the engine and by heat generated by the reaction through the catalyst. Moreover, an occlusion-deoxidization type catalyst purifying NOx is known as an exhaust purification catalyst, and as this type of catalyst occludes the contaminated substances such as NOx temporarily, a purification capability saturates according as an occlusion quantity reaches saturation. That is, as some types of the exhaust purification catalyst gradually deteriorates the purification capability by the continuous engine operation, above-mentioned, when the engine continues to be operated even if in idling, the occlusion quantity (purification capability) reaches saturation early.

Moreover, the device disclosed in the publication 1 presupposes suspending the engine in idling. The reason is that the device of the publication is subject to a hybrid vehicle and that the device restricts lowering of fuel consumption resulting from an unnecessary engine operation. The control for forcibly suspending the engine in idling is performed not only over the hybrid vehicle, and such control for suspending the engine is often named "Economy Running Control." This is the control to suspend the engine, for instance, in case that a vehicle stops at a stoplight and that a predetermined condition is satisfied.

In case that the hybrid vehicle disclosed in the publication 1 and the vehicle performing the Economy Running Control are loaded with the occlusion-deoxidization type catalyst, the occlusion quantity of the catalyst does not increase because of generating no exhaust gas while the engine is in suspension. However, the recovery process for reducing the occlusion quantity is not performed, either. The recovery process is a process to supply a reducing agent such as, e.g., fuel into the catalyst and to deoxidize nitrate nitrogen occluded in the catalyst and change it into nitrogen gas, and as occluded nitrogen is released, the purification capability of the catalyst is recovered. Though the reducing agent is supplied into the exhaust gas when the engine suspends during such recovery process, the reducing agent does not reach the catalyst and is consumed in vain, or unused reducing agent causes problems such as temporary increase of HC (hydrocarbon) emission quantity. Moreover, when the engine suspends just before performing the recovery process, in next drive, the occlusion quantity of the catalyst is almost in saturation and the catalyst temperature is in low, therefore, it is possible that NOx cannot be purified.

As opposed to that, the device disclosed in EP 0 869 267 A2 is configured to always initiate a recovery process before the internal combustion engine is stopped.

Furthermore, the device disclosed in US 6,220,019 B1 is configured to initiate a recovery process if both the internal combustion engine is to be stopped and a lean operation is performed. In case a stoichiometric/rich operation is performed, the engine is immediately stopped by interrupting the fuel supply and the supply of the driving signal to the ignition plug.

### SUMMARY OF THE INVENTION

An object of the invention is to provide a control device and method which enable to perform with mutually adjusting the suspension control of the internal combustion engine and the recovery process of the catalyst appropriately.

The invention provides a control device and method of an internal combustion engine reserving temporarily a control based on a stop demand of the internal combustion engine, in case that both the stop demand of the internal combustion engine and a recovery control of an exhaust purification device are simultaneously set.

A first aspect of the present invention relates to a control device as defined in claim 1.

According to claim 1, the second means determines a level of requirement for performing the recovery process, and determines whether a need for recovery is present based on the level of the requirement. The third means stops the internal combustion engine after the recovery process is terminated based on the need for recovery .

Thus, the level of the requirement of the recovery process is determined, and the recovery process is performed based on the determination result. In other words, in case that the level of the requirement of the recovery process is low, the internal combustion engine is stopped without the recovery process being performed, and inversely, in case that the level of the requirement of the recovery process is high, the internal combustion engine is stopped after the recovery process has been performed. As the result, the capability of the exhaust purification device to occlude the NOx can be maintained to be sufficiently high when restarting the internal combustion engine without the excessive number of performances of the recovery process.

A second aspect in the present invention relates to a control method as defined in claim 3.

### BRIEF DESCRIPTION OF THE DRAWINGS

The forgoing and further objects, features and advantages of the invention will become apparent from the following description of preferred embodiments with reference to the accompanying drawings, wherein like numerals are used to represent like elements and wherein:
Fig. 1 is a flow chart showing an example of control by a control device which is outside the scope of the claims.
Fig. 2 is a flow chart showing an example of control by a control device according to a first preferred embodiment.
Fig. 3 is a flow chart showing an example of control by a control device according to a second preferred embodiment.
Fig. 4 is a view schematically showing an example of power system of a vehicle on which the internal combustion engine is mounted.

### DETAILED DESCRIPTION OF THE PREFERRED EMBODIMENTS

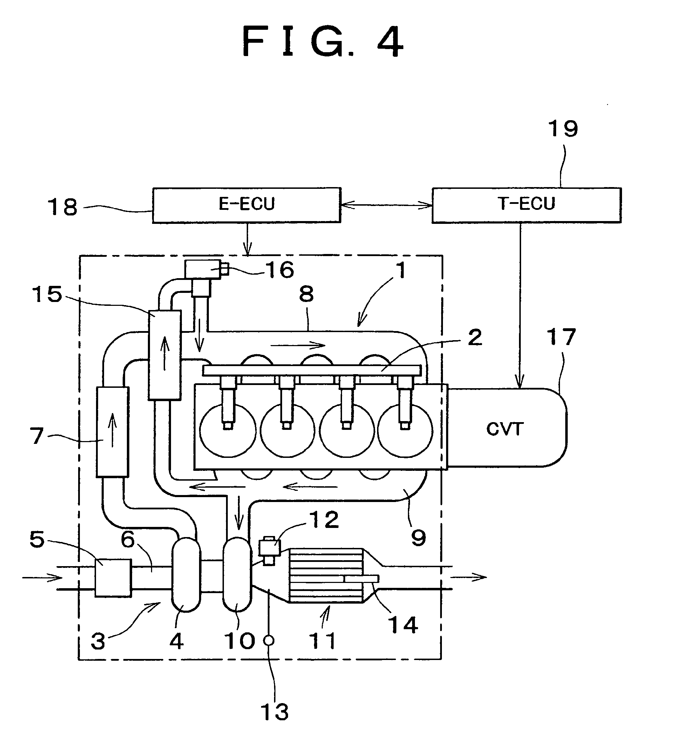

Next, this invention will be explained based on preferred embodiments. An internal combustion engine according to this invention includes a power device which outputs power by combusting fuel such as a diesel engine and a gasoline engine, and an example is the internal combustion engine which is mounted on a vehicle and is used as a power source mainly for running. Fig. 4 schematically shows an example of use of a direct injection type diesel engine 1 (hereinafter, refer to simply as an engine) as the power source of the vehicle in the first through the third preferred embodiments. This engine 1 is the internal combustion engine to directly inject fuel into the inside of a cylinder, and is equipped with a common-rail type electronic control fuel injection system 2 to enable fuel injection at high pressure. One of the publicly known structure can be used for this electronic control fuel injection system 2.

Moreover, the engine 1 shown in Fig.4 is equipped with an exhaust turbine type supercharged engine i.e. turbocharger 3. An intake pipe 6 interposing an air cleaner 5 is connected with an air intake of a compressor 4, and an intake manifold 8 is connected with a delivery hole of the compressor 4 through an intercooler 7 to drop an intake temperature.

Moreover, an exhaust manifold 9 which is communicatively connected with each cylinder is connected with an inflow hole of a turbine 10 in the turbocharger 3. Furthermore, a catalyst converter 11 equipped with an exhaust purification catalyst is connected with an outlet of the turbine 10. At an upper side of this catalyst converter 11, an air-fuel ratio sensor 12 and a pressure sensor 13 which detects pressure of an exhaust gas flowing in the catalyst converter 11, are placed. Furthermore, a temperature sensor 14 for detecting the catalyst temperature is placed. This route from the exhaust manifold 9 to an opening (not shown) to the atmosphere through the catalyst converter 11 is an exhaust route.

Moreover, herein, the exhaust purification catalyst is explained. The exhaust purification catalyst shown in Fig.4 is an NOx occlusion-deoxidization type catalyst. This has functions to occlude NOx which is one of the contaminated substances in the exhaust gas in an oxidized atmosphere, in the form of nitrate nitrogen, to deoxidize the occluded nitrate nitrogen in a deoxidized atmosphere and change it into nitrogen gas and to release it. Furthermore, as an activated oxygen is generated in the occlusion and in the deoxidization of NOx, the exhaust purification catalyst has functions to oxidize soot (PM: micro particle discharge) adhering to a surface of the catalyst and to remove it by the activated oxygen and the oxygen in the exhaust gas. Therefore, it is necessary to change the atmosphere of this exhaust purification catalyst into the oxidized atmosphere and the deoxidized atmosphere every predetermined time. The engine 1 is structured to perform such changes of atmospheres by switching over an air-fuel ratio to an air excessive lean air-fuel ratio (an air-fuel ratio larger than a theoretical air-fuel ratio) and to a rich air-fuel ratio to be relatively increased fuel quantity (an air-fuel ratio less than the theoretical air-fuel ratio). Moreover, the control to increase the air-fuel ratio to release nitrogenous substance from the exhaust purification catalyst may be temporary, and such temporary increase of the air-fuel ratio is named "Rich Spike," which is an example of the control equivalent to "recovery process."

Furthermore, the engine 1 shown in Fig.4 is equipped with an exhaust recirculation device to reduce NOx in the exhaust gas. That is, the exhaust manifold 9 and the intake manifold 8 are connected via an EGR cooler 15 cooling the exhaust gas recirculated and an EGR valve 16 performing the control of initiation and termination of recirculation and the control maintaining a fixed recirculation ratio (EGR ratio).

A continuously variable transmission 17 (CVT) is connected with the engine 1 output side. The point is that this CVT 17 is a transmission to enable to change a shift ratio continuously, and any other type, such as a belt type CVT and a traction type (troydal type) CVT can be adopted.

An electronic control unit for the engine (E-ECU) 18 to electrically control a fuel injection quantity, the injection timing, the initiation and the termination of the exhaust recirculation, and an opening of a throttle valve (not shown) in the engine 1, and an electronic control unit for the transmission (T-ECU) 19 controlling the CVT 17 are equipped. These ECUs 18 and 19 are mainly comprised of microcomputers to control a throttle opening, a fuel injection quantity (that is, an engine load), the stop including the suspension and starting of the engine 1 or a variable speed ratio of the CVT 17 (that is, ratio of engine speed and output rotation speed to wheel side) based on a required output amount shown by a throttle valve opening, a speed of a vehicle, an engine cooling water temperature, an oil temperature of the CVT 17, detection signals of each sensor 12, 13 and 14, an on-off signal of a brake operation, and an on-off signal of an ignition (IG) key etc.

At this point, explaining an automatic suspension and restarting of the engine 1, this control is named so-called "Economy Running Control," and it is the control to prevent the engine 1 from the unnecessary operation and to improve fuel consumption. That is, in case that the vehicle temporarily stops, the engine 1 is automatically suspended under the conditions that the engine cooling water temperature is high, and that the brake pedal is depressed, and that an electric power to drive a starter motor is sufficiently charged, and the engine 1 is automatically restarted based on the detection of preliminary operation for moving the vehicle.

The engine 1 injects the fuel to the inside of each cylinder and combusts it, and outputs mechanical energy generated by the combustion as a driving force. The quantity of the fuel consumed by the combustion is controlled to small quantity as possible within the limit satisfying the required output amount. Moreover, the contaminated substances such as NOx generated by fuel combustion in the cylinder are occluded in the catalyst in the catalyst converter 11, the fuel quantity in the exhaust gas is increased and the atmosphere is changed into the deoxidized atmosphere before the occlusion quantity saturates, and nitrate nitrogen occluded in the catalyst is deoxidized and is released as nitrogen gas. That is, the recovery process for recovering the purification capability of the catalyst is performed. In this case, the fuel is equivalent to a reducing agent to change the catalyst into the deoxidized atmosphere. Moreover, the reducing agent may be injected to the inside of the cylinder to decrease the air-fuel ratio, or may be supplied by injecting into the exhaust gas.

The engine 1, basically, is controlled to minimize the fuel consumption according to a required driving amount. Briefly explaining an example of the control, a target driving force is calculated based on the throttle valve opening representing the required driving amount and the speed of the vehicle, and a target output is calculated based on the target driving force and the speed of the vehicle. A target engine revolution is calculated based on the target output. These may be performed, for instance, by previously calculating the engine revolution to minimize the fuel consumption to each output, preparing this as a map, and calculating the target engine revolution from the target output and the map. And the various speed ratio of the CVT 17 is controlled to achieve the target engine revolution and the target output.

On the other hand, a target engine torque is calculated based on the target output and engine revolution. And the engine load (concretely, the throttle opening or the fuel injection quantity) is controlled to output the target engine torque.

NOx is generated by fuel combustion in the engine 1, and the NOx is occluded by the occlusion-deoxidization type catalyst provided the exhaust system. As the occlusion quantity of NOx by the catalyst increases by the continuous engine 1 operation, the nitrate nitrogen occluded in the catalyst is deoxidized and is changed into nitrogen gas, and is released into the open air, by supplying the reducing agent every predetermined time and changing into the deoxidized atmosphere, that is, by performing the Rich Spike equivalent the recovery process.

This Rich Spike is performed, for instance, in case that the integrated value of the fuel injection time reaches a standard value established previously. That is, the quantity of NOx generated in the engine 1 correlates with the operation condition such as the engine load and the engine revolution, and the quantity of NOx occlusion correlates with the concentration of NOx discharged from the engine 1 and the continuation time, so that the NOx quantity can be integrated by integrating the fuel injection quantity and the time. Therefore, the timing performing the Rich Spike can be determined by integrating the fuel injection time of each operation condition of the engine 1.

In addition, the quantity of the particulate matter (PM) such as soot decreases at a high load side with low air-fuel ratio. That is, the particulate matter and NOx have a relationship that, when the operation condition of the engine 1 is changed to reduce one discharge quantity, the other discharge quantity increases, and each quantity has some correlation. Therefore, the NOx discharge quantity can be calculated based on the integrated values of the fuel injection quantity and the continuation time, and the discharge quantity of the particulate matter can be also calculated.

The NOx occlusion in the catalyst and an accumulation of particulate matter increase according to the operation time of the engine 1, so that the level of the performing the recovery process varies according to the operation condition of the engine 1. As the recovery process is performed by increasing the quantity of the reducing agent in the exhaust gas, the premise that the engine 1 is in operation is required. On the other hand, the stop command of the engine 1 is induced by a driver's turning off the ignition key or by the suspension command at "Economy Running Control". So, the control device of the preferred embodiment of the present invention is so configured as to perform the following control to mutually adapt the recovery process of the catalyst and the stop command of the engine 1.

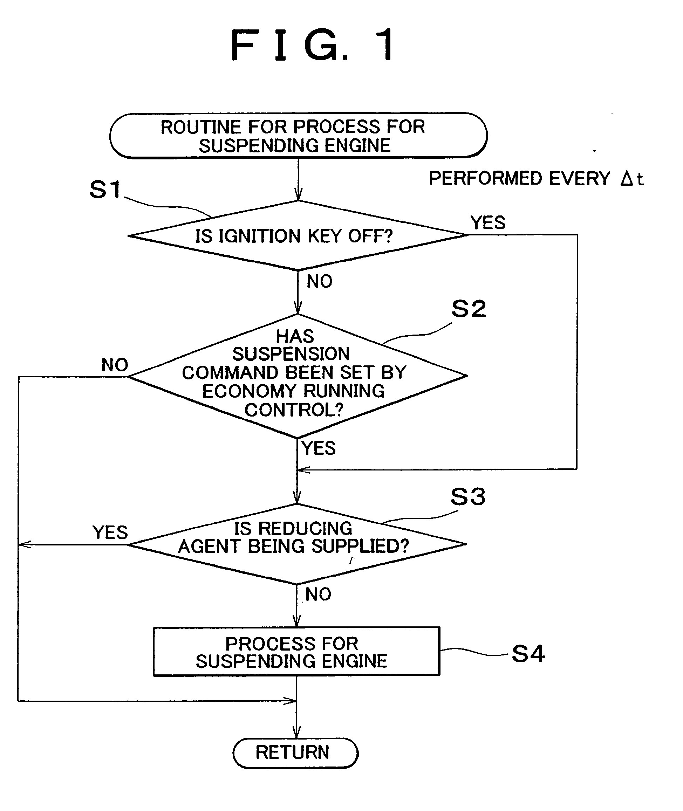

Fig. 1 is a flow chart explaining the control of the example which is outside the scope of the claims, and the control is repeatedly performed every predetermined short time Δt. First, as the determination whether or not the stop command has been set, whether the ignition (IG) key is off is determined (step S1). And, whether or not the suspension command of the engine 1 by the "Economy Running Control" has been set is determined (step S2). Either determination at steps S1 and S2 can be performed first. In case that the determinations at steps S1 and S2 are both NO, this means no stop command (the stop command at step S1 and the suspension command) of the engine 1, so that ECU proceeds to RETURN without performing any control.

On the other hand, in the case that either determination at step S1 or step S2 isYES, that is, in the case that the stop command of the engine 1 has been set, whether the reducing agent is being supplied is determined (step S3). Concretely, whether the Rich Spike is being performed, or whether the fuel injection into the exhaust gas, so-called post injection, is being performed, so-called whether the recovery process of the catalyst is being performed, are determined.

In the case that the determination at step S3 is YES as the recovery process of the catalyst is being performed, ECU proceeds to RETURN. After that, when time passes and the supply of the reducing agent is terminated, the determination at step S3 is NO, and the stop process of the engine 1 is performed based on the result of the determination of step S3 (step S4). That is, if the recovery process of the catalyst is being performed though the stop command has been set, the stop control of the engine 1 based on the stop command is not performed immediately, and the stop process of the engine is delayed until the recovery process is terminated.

Therefore, as the engine 1 is not stopped while the reducing agent is being supplied, the control shown in Fig.1 can previously avoid problems such that the recovery of the purification capability of the catalyst become insufficient, that the supplied reducing agent (fuel) is wasted, moreover, that the quantity of HC so-called contaminated substances in the exhaust gas increases resulting from the reducing agent. Furthermore, when restarting the engine 1, the purification capability of the catalyst can be maintained to be sufficiently high.

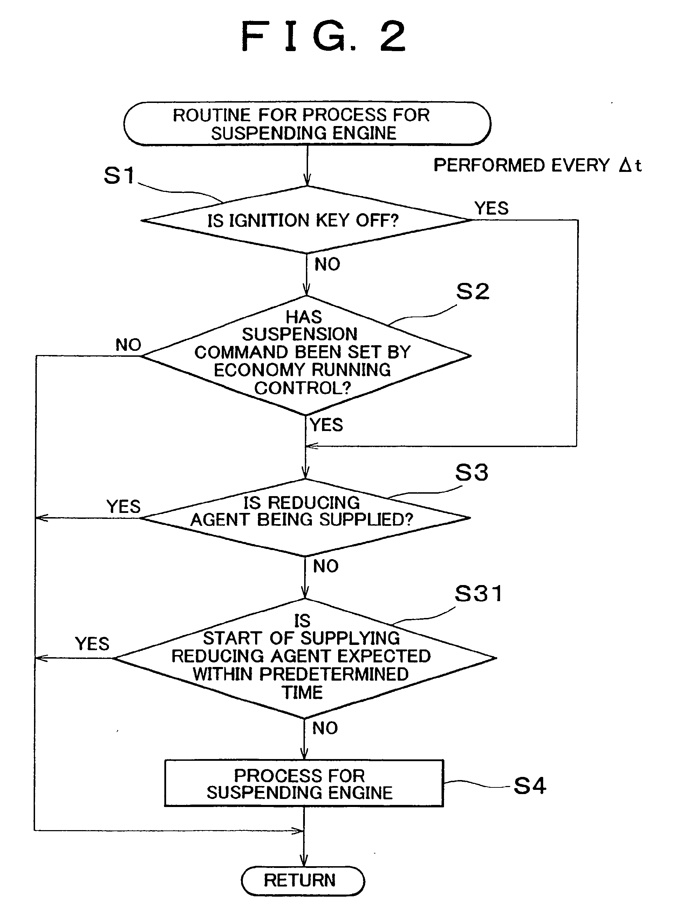

Moreover, the control can be structured to delay the stop process of the engine 1 in case that the supply of the reducing agent is expected within a predetermined time. The first preferred embodiment for performing the control is shown by a flow chart in Fig.2, and an example shown there, is structured to determine whether the supply of the reducing agent is performed within the predetermined time (step S31) in case that the determination at step S3 shown in Fig. 1 is NO.

Like aforementioned, the generation quantity of NOx and soot so-called contaminated substances is quantity according to a fuel combustion quantity, a combustion condition or a fuel injection time, so that the time needed until the purification capability of the catalyst saturates can be calculated based on the integrated values such as the fuel supply quantity, the injection quantity, or injection time measured after the last recovery process of the catalyst is terminated. Therefore, the determination at step S31 can be performed based on the integrated values.

Furthermore, in case that the determination at the step S31 is YES, that is, in case that the supply of the reducing agent (the recovery process) is expected within the predetermined time from when the stop command to the engine 1 at S1 and S2 has been set is determined, ECU proceeds to RETURN. On the other hand, in case that the determination at step S31 is NO, that is, in case that the reducing agent is not supplied within the predetermined time (in case that the recovery process is not expected), ECU proceeds to step S4, and the stop process of the engine 1 is performed.

That is, in the control shown in Fig.2, not only while the reducing agent is being supplied, but also in case that the supply of the reducing agent is expected within the predetermined time, that is, in case that the recovery process of the catalyst is performed within the predetermined time, the stop process of the engine 1 based on the stop command of the engine 1 is delayed. Therefore, the situation such that the engine 1 is stopped in the condition that the purification capability of the catalyst is almost saturated, and that the purification capability of the catalyst is in low when restarting the engine 1, can be previously prevented. Moreover, as the recovery process of the catalyst is performed in the condition that the engine 1 is continuously being operated, in the recovery process of the catalyst, that is, in the example, the deoxidization of the occluded nitrate nitrogen can be performed efficiently and sufficiently as needed.

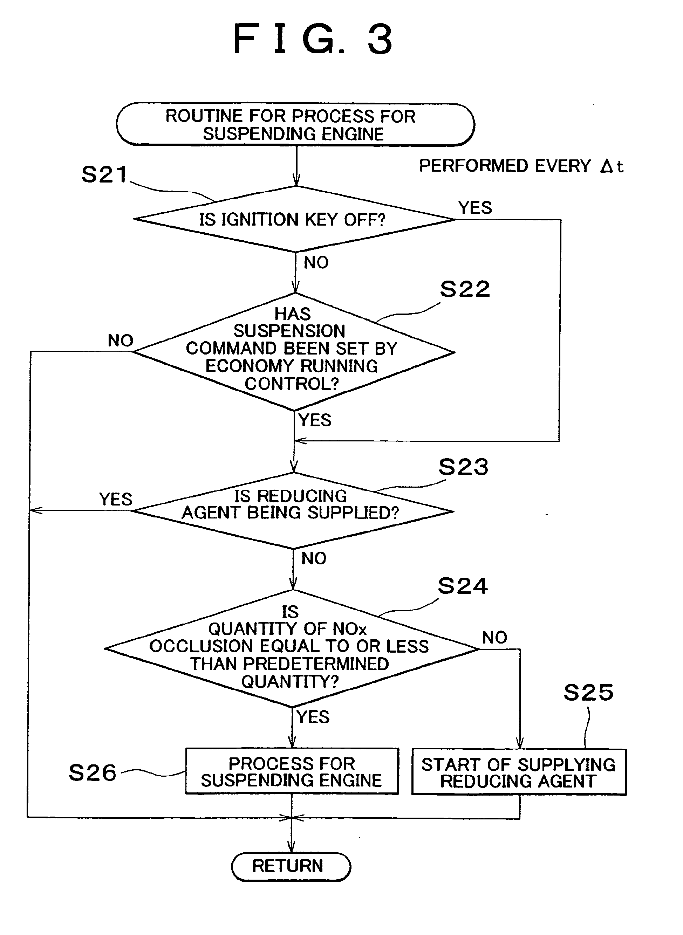

Furthermore, in case that the stop command of the engine 1 has been set, the control device of the second preferred embodiment in the present invention can be configured to stop the engine 1 after the recovery process of the purification capability of the exhaust purification device is performed. The control of the second preferred embodiment is shown by a flow chart in Fig.3. An example shown in Fig. 3 is an example that the reducing agent is supplied as the recovery process, and the process is repeatedly performed every short time Δt. In this example shown in Fig.3 as well as in the example shown in Fig.1, whether or not the stop command of the engine 1 has been set is determined by whether the ignition (IG) key is off (step S21), and by whether the suspension command by "Economy Running Control" has been set (step S22). These steps of S21 and S22 are the determination steps similar to the steps S1 and S2 shown in Fig.1.

In case that the stop command of the engine 1 has been set, that is, in case that the determinations at step S21 or S22 are YES, whether the reducing agent is being supplied is determined (step S23). That is, whether the recovery process of the catalyst is being performed is determined. This determination is similar to the determination at the step S3 shown in Fig.1. In the case that the determination at this step S23 is YES, the ECU proceeds to RETURN without performing any control. That is, even if the stop command of the engine 1 has been set, the engine 1 is not stopped immediately.

On the other hand, in case that the determination at step S23 is NO because the reducing agent is not being supplied, whether the quantity of NOx occlusion is equal to or less than a predetermined quantity is determined (step S24). In this case, the quantity of NOx occlusion means quantity of NOx occluded in the catalyst. If the quantity of NOx occlusion is equal to or less than the predetermined value, it means the condition that the NOx purification capability of the catalyst is well below the limit. Inversely, in case that the quantity of NOx occlusion is more than the predetermined value, it means the condition that the catalyst has almost no capacity to occlude NOx and that the purification capability is nearly in the saturation. Moreover, the determination of the quantity of NOx occlusion by the catalyst can be performed, aforementioned, based on the integrated values of the fuel supply quantity or the fuel injection quantity and the integrated value of the fuel supply time.

In case that the determination at the step S24 is NO, that is, in case that the quantity of NOx occlusion is more than the predetermined value and that the catalyst has no capacity to occlude NOx and that the level of requirement for performing the recovery process is high, the supply of the reducing agent is started (step S25). That is, the recovery process of the catalyst is performed. After that, when the determination at the step S23 is performed, the determination at the step S23 is YES because the reducing agent is being supplied, and ECU proceeds to RETURN. Therefore, the supply of the reducing agent is continued without stopping the engine 1.

As the supply of the reducing agent is terminated when time passes more, the determination at step S23 is NO. In that case, as the recovery process of the catalyst is completed by the termination of the supply of the reducing agent, the quantity of NOx occlusion comes back to equal to or less than the predetermined quantity and the level of the requirement of the recovery process is in low. As the result, as the determination at step S24 is YES, in that case, ECU proceeds to step S26 and the stop process of the engine 1 is performed.

In this way, in the example shown in Fig.3, in case that the stop command of the engine 1 has been set, even if the recovery process of the catalyst has not performed by that time, the engine 1 is stopped after the recovery process of the catalyst is performed. And especially, in the example of the control shown in Fig.3, even if the purification capability of the catalyst has not reached saturation, if the condition is just before reaching saturation, as the stop command of the engine 1 has been set, the recovery process of the catalyst is performed before the purification capability reaches saturation, and the engine 1 is stopped after the recovery process is terminated.

Therefore, according to the control shown in Fig.3, after the recovery process of the catalyst, concretely, the supply of the reducing agent is terminated and the NOx occlusion capacity of the catalyst is recovered, the engine 1 is stopped. Accordingly, problems such that the reducing agent (fuel) is wasted due to simultaneous occurrence of supply of the of the reducing agent and the stop of the engine 1, moreover, and that the reducing agent causes the increase of the quantity of so-called contaminated substances such as HC in the exhaust gas, can be previously avoided. And, as the supply of the reducing agent is terminated and the purification capability of the catalyst is recovered in the condition that the operation of the engine 1 is being continued, the recovery of the purification capability, that is, the deoxidization of the occluded nitrogen is performed at the high catalyst temperature, the recovery of the purification capability of the catalyst can be performed sufficiently and rapidly. As the result, the NOx occlusion capacity of the catalyst can be sufficiently heightened when restarting the engine 1.

Here, explaining a relationship between the each preferred embodiment and this invention, functional means at steps S2 and S22 can be regarded as a first means, the functional means at steps S31 and S24 can be regarded as a second means, and the functional means to proceed to RETURN in case that the determination at step S31 is YES, and step S25 can be regarded as a third means.

Moreover, the occlusion in the present invention includes holding in the catalyst by an absorption, a suction etc.

"Stop" includes "suspend" and "suspension".

In the illustrated embodiment, the controllers are implemented with general purpose processors. It will be appreciated by those skilled in the art that the controllers can be implemented using a single special purpose integrated circuit (e.g., ASIC) having a main or central processor section for overall, system-level control, and separate sections dedicated to performing various different specific computations, functions and other processes under control of the central processor section. The controllers can be a plurality of separate dedicated or programmable integrated or other electronic circuits or devices (e.g., hardwired electronic or logic circuits such as discrete element circuits, or programmable logic devices such as PLDs, PLAs, PALs or the like). The controllers can be suitably programmed for use with a general purpose computer, e.g., a microprocessor, microcontroller or other processor device (CPU or MPU), either alone or in conjunction with one or more peripheral (e.g., integrated circuit) data and signal processing devices. In general, any device or assembly of devices on which a finite state machine capable of implementing the procedures described herein can be used as the controllers. A distributed processing architecture can be used for maximum data/signal processing capability and speed.

## Claims

1. A control device (18) of an internal combustion engine (1) which is equipped with an exhaust system including an exhaust purification device (11) for purifying an exhaust gas by occluding NOx, and which performs a recovery process to recover a capability of the exhaust purification device (11) to occlude the NOx by removing the NOx occluded in the exhaust purification device (11) while the internal combustion engine (1) is in operation, said control device (18) comprising:
a first means (S2; S22) for determining whether a stop demand for stopping the internal combustion engine (1) is present;
a second means (S31; S24) for determining whether a requirement for performing the recovery process is present; and
a third means (S31; S25) for delaying the stop of the internal combustion engine (1) until the recovery process is terminated if both the requirement for performing the recovery process is present and the stop demand is present, thereby giving priority to the recovery process,
**characterized in that**
the second means (S31; S24) determines a quantity of NOx occlusion based on a quantity of fuel supply to the internal combustion engine (1) after the last recovery process has been performed, and determines that the requirement for performing the recovery process is present if the quantity of NOx occlusion is more than a predetermined value.

2. The control device (18) according to claim 1, further comprising:
a fourth means (S3; S23) for determining whether the recovery process is being performed; and
a fifth means (S3; S23) for delaying the stop of the internal combustion engine (1) until the recovery process is terminated if both the recovery process is being performed and the stop demand is present, thereby giving priority to the recovery process.

3. A control method of an internal combustion engine (1) which is equipped with an exhaust system including an exhaust purification device (11) purifying exhaust gas by occluding NOx, and which performs a recovery process to recover a capability of the exhaust purification device (11) to occlude the NOx by removing the NOx occluded in the exhaust purification device (11) while the internal combustion engine (1) is in operation, said control method comprising:
a first step (S2; S22) of determining whether a stop demand for stopping the internal combustion engine (1) is present;
a second step (S31; S24) of determining whether a requirement for performing the recovery process is present; and
a third step (S31; S25) of delaying the stop of the internal combustion engine (1) until the recovery process is terminated if both the requirement for performing the recovery process is present and the stop demand is present, thereby giving priority to the recovery process,
**characterized in that**
the second step (S31; S24) determines a quantity of NOx occlusion based on a quantity of fuel supply to the internal combustion engine (1) after the last recovery process has been performed, and determines that the requirement for performing the recovery process is present if, the quantity of NOx occlusion is more than a predetermined value.

4. The control method according to claim 3, further comprising:
a fourth step (S3; S23) of determining whether the recovery process is being performed; and
a fifth step (S3; S23) of delaying the stop of the internal combustion engine (1) until the recovery process is terminated if both the recovery process is being performed and the stop demand is present, thereby giving priority to the recovery process.

## Patentansprüche

1. Steuerungsvorrichtung (18) einer Brennkraftmaschine (1), die mit einem Abgassystem ausgestattet ist, das eine Abgasreinigungsvorrichtung (11) zum Reinigen eines Abgases durch Speichern von NOx enthält und die einen Wiederherstellungsvorgang durchführt, um eine Fähigkeit der Abgasreinigungsvorrichtung (11), das NOx zu speichern, durch Entfernen des in der Abgasreinigungsvorrichtung (11) gespeicherten NOx wiederherzustellen, während sich die Brennkraftmaschine (1) im Betrieb befindet, wobei die Steuerungsvorrichtung (18) Folgendes umfasst:
eine erste Einrichtung (S2; S22) zum Feststellen, ob eine Stoppanforderung zum Stoppen der Brennkraftmaschine (1) vorhanden ist;
eine zweite Einrichtung (S31; S24) zum Feststellen, ob ein Erfordernis zum Durchführen des Wiederherstellungsvorgangs vorhanden ist; und
eine dritte Einrichtung (S31; S25) zum Verzögern des Stopps der Brennkraftmaschine (1), bis der Wiederherstellungsvorgang abgeschlossen ist, falls sowohl das Erfordernis zum Durchführen des Wiederherstellungsvorgangs vorhanden ist als auch die Stoppanforderung vorhanden ist, wodurch dem Wiederherstellungsvorgang Priorität eingeräumt wird,
**dadurch gekennzeichnet, dass**
die zweite Einrichtung (S31; S24) beruhend auf einer Menge an Kraftstoffzufuhr zur Brennkraftmaschine (1), nachdem der letzte Wiederherstellungsvorgang durchgeführt worden ist, eine Menge an NOx-Speicherung feststellt und feststellt, dass das Erfordernis zum Durchführen des Wiederherstellungsvorgangs vorhanden ist, falls die Menge an NOx-Speicherung mehr als ein vorbestimmter Wert ist.

2. Steuerungsvorrichtung (18) nach Anspruch 1, mit außerdem:
einer vierten Einrichtung (S3; S23) zum Feststellen, ob der Wiederherstellungsvorgang gerade durchgeführt wird; und
einer fünften Einrichtung (S3; S23) zum Verzögern des Stopps der Brennkraftmaschine (1), bis der Wiederherstellungsvorgang abgeschlossen ist, falls sowohl der Wiederherstellungsvorgang gerade durchgeführt wird als auch die Stoppanforderung vorhanden ist, wodurch dem Wiederherstellungsvorgang Priorität eingeräumt wird.

3. Steuerungsverfahren einer Brennkraftmaschine (1), die mit einem Abgassystem ausgestattet ist, das eine Abgasreinigungsvorrichtung (11) enthält, die Abgas durch Speichern von NOx reinigt, und die einen Wiederherstellungsvorgang durchführt, um eine Fähigkeit der Abgasreinigungsvorrichtung (11), das NOx zu speichern, durch Entfernen des in der Abgasreinigungsvorrichtung (11) gespeicherten NOx wiederherzustellen, während sich die Brennkraftmaschine (1) im Betrieb befindet, wobei das Steuerungsverfahren Folgendes umfasst:
einen ersten Schritt (S2; S22), der feststellt, ob eine Stoppanforderung zum Stoppen der Brennkraftmaschine (1) vorhanden ist;
einen zweiten Schritt (S31; S24), der feststellt, ob ein Erfordernis zum Durchführen des Wiederherstellungsvorgangs vorhanden ist; und
einen dritten Schritt (S31; S25), der den Stopp der Brennkraftmaschine (1) verzögert, bis der Wiederherstellungsvorgang abgeschlossen ist, falls sowohl das Erfordernis zum Durchführen des Wiederherstellungsvorgangs vorhanden ist als auch die Stoppanforderung vorhanden ist, wodurch dem Wiederherstellungsvorgang Priorität eingeräumt wird,
**dadurch gekennzeichnet, dass**
der zweite Schritt (S31; S24) beruhend auf einer Menge an Kraftstoffzufuhr zu der Brennkraftmaschine (1), nachdem der letzte Wiederherstellungsvorgang durchgeführt worden ist, eine Menge an NOx-Speicherung feststellt und feststellt, dass das Erfordernis zum Durchführen des Wiederherstellungsvorgangs vorhanden ist, falls die Menge an NOx-Speicherung mehr als ein vorbestimmter Wert ist.

4. Steuerungsverfahren nach Anspruch 3, mit außerdem:
einem vierten Schritt (S3; S23), der feststellt, ob der Wiederherstellungsvorgang gerade durchgeführt wird; und
einem fünften Schritt (S3; S23), der den Stopp der Brennkraftmaschine (1) verzögert, bis der Wiederherstellungsvorgang abgeschlossen ist, falls sowohl der Wiederherstellungsvorgang gerade durchgeführt wird als auch die Stoppanforderung vorhanden ist, wodurch dem Wiederherstellungsvorgang Priorität eingeräumt wird.

## Revendications

1. Dispositif de commande (18) d'un moteur à combustion interne (1) qui est équipé d'un système d'échappement comprenant un dispositif de purification d'échappement (11) destiné à purifier un gaz d'échappement par occlusion de NOx, et qui exécute un processus de récupération afin de récupérer une capacité du dispositif de purification d'échappement (11) de façon à occlure le NOx en évacuant le NOx occlus dans le dispositif de purification d'échappement (11) alors que le moteur à combustion interne (1) est en fonctionnement, ledit dispositif de commande (18) comportant :
des premiers moyens (S2 ; S22) destinés à déterminer si une demande d'arrêt pour l'arrêt du moteur à combustion interne (1) est présente ;
des deuxièmes moyens (S31 ; S24) destinés à déterminer si une exigence d'exécution du processus de récupération est présente ; et
des troisièmes moyens (S31 ; S25) destinés à retarder l'arrêt du moteur à combustion interne (1) jusqu'à ce que le processus de récupération soit terminé si à la fois l'exigence d'exécution du processus de récupération est présente et la demande d'arrêt est présente, en donnant ainsi priorité au processus de récupération,
**caractérisé en ce que**
les deuxièmes moyens (S31 ; S24) déterminent une quantité d'occlusion de NOx sur la base d'une quantité d'alimentation en carburant pour le moteur à combustion interne (1) après que le dernier processus de récupération ait été exécuté, et déterminent que l'exigence d'exécution du processus de récupération est présente si la quantité d'occlusion de NOx est supérieure à une valeur prédéterminée.

2. Dispositif de commande (18) selon la revendication 1, comportant en outre :
des quatrièmes moyens (S3 ; S23) destinés à déterminer si le processus de récupération est exécuté ; et
des cinquièmes moyens (S3 ; S23) destinés à retarder l'arrêt du moteur à combustion interne (1) jusqu'à ce que le processus de récupération soit terminé si à la fois le processus de récupération est exécuté et la demande d'arrêt est présente, en donnant ainsi priorité au processus de récupération.

3. Procédé de commande d'un moteur à combustion interne (1) qui est équipé d'un système d'échappement comprenant un dispositif de purification d'échappement (11) qui purifie le gaz d'échappement par occlusion de NOx, et qui exécute un processus de récupération afin de récupérer une capacité du dispositif de purification d'échappement (11) de façon à occlure le NOx en enlevant le NOx occlus dans le dispositif de purification d'échappement (11) alors que le moteur à combustion interne (1) est en fonctionnement, ledit procédé de commande comportant :
une première étape (S2 ; S22) de détermination du fait qu'une demande d'arrêt pour l'arrêt du moteur à combustion interne (1) est présente ;
une deuxième étape (S31 ; S24) de détermination du fait qu'une exigence d'exécution du processus de récupération est présente ; et
une troisième étape (S31 ; S25) de retard de l'arrêt du moteur à combustion interne (1) jusqu'à ce que le processus de récupération soit terminé si l'exigence d'exécution du processus de récupération est présente et la demande d'arrêt est présente, en donnant ainsi priorité au processus de récupération,
**caractérisé en ce que**
la deuxième étape (S31 ; S24) détermine une quantité d'occlusion de NOx sur la base d'une quantité d'alimentation en carburant pour le moteur à combustion interne (1) après que le dernier processus de récupération ait été exécuté, et détermine que l'exigence d'exécution du processus de récupération est présente si la quantité d'occlusion de NOx est supérieure à une valeur prédéterminée.

4. Procédé de commande selon la revendication 3, comportant en outre :
une quatrième étape (S3 ; S23) de détermination du fait que le processus de récupération est en cours d'exécution ; et
une cinquième étape (S3 ; S23) de retard de l'arrêt du moteur à combustion interne (1) jusqu'à ce que le processus de récupération soit terminé si à la fois le processus de récupération est exécuté et la demande d'arrêt est présente, en donnant ainsi priorité au processus de récupération.
